# EUROPÄISCHE PATENTANMELDUNG

(11) **EP 4 844 153 A1**
(43) Veröffentlichungstag der Anmeldung: **25.11.2026**
(21) Anmeldenummer: 26159055.8
(22) Anmeldetag: 17.02.2026
(51) Int. Cl.: E04F 10/10, E06B 7/096, F16H 55/00

(54) **LAMELLENVERSTELLEINRICHTUNG MIT FLANKENVORSPANNUNG HINTERGRUND**

(71) Anmelder: Gerhard Geiger GmbH & Co. KG, 74321 Bietigheim-Bissingen (DE)
(72) Erfinder: Hoffmann, Reiner, 74343 Sachsenheim (DE); Hückmann, Uwe, 74321 Bietigheim-Bissingen (DE)
(74) Vertreter: Jeck, Jonathan

(57) **Zusammenfassung**

Die vorliegende Erfindung betrifft eine Lamellenverstelleinrichtung eines Pergola- und/oder Beschattungssystems. Die Lamellenverstelleinrichtung umfasst eine Lamelle, die um eine Drehachse drehbar ist, ein erstes Getriebe, das an einem ersten Ende der Lamelle angeordnet ist, wobei das erste Getriebe ein erstes Schneckengewinde und ein erstes Zahnrad umfasst, das in das erste Schneckengewinde eingreift, sowie ein zweites Getriebe, das an einem zweiten Ende der Lamelle angeordnet ist, das dem ersten Ende gegenüberliegt, wobei das zweite Getriebe ein zweites Schneckengewinde und ein zweites Zahnrad umfasst, das in das zweite Schneckengewinde eingreift. Die Schneckengewinde weisen Gewindeflanken auf, wobei zumindest im bewegungslosen Zustand mindestens ein Zahn des ersten Zahnrads und mindestens ein Zahn des zweiten Zahnrads an zueinander entgegengesetzt orientierten Seiten der Gewindeflanken der jeweiligen Schneckengewinde anliegen.

## Beschreibung

Pergola- und Beschattungssysteme werden in vielfältigen Anwendungen eingesetzt, um Außenbereiche vor Sonneneinstrahlung zu schützen oder um eine variable Licht- und Luftregulierung zu ermöglichen. Derartige Systeme umfassen häufig eine Mehrzahl von Lamellen, die um eine Längs- bzw. Drehachse zwischen verschiedenen Ausrichtungen, beispielsweise zwischen einer horizontalen und einer vertikalen Position, schwenkbar sind. Die Verstellung der Lamellen erfolgt dabei typischerweise über Getriebeeinheiten, wobei Schneckengetriebe aufgrund ihrer selbsthemmenden Eigenschaften und ihrer kompakten Bauweise verbreitet zum Einsatz kommen. Ein Schneckengetriebe umfasst üblicherweise ein Schneckengewinde, das mit einem Zahnrad in Eingriff steht, wobei die Drehbewegung des Schneckengewindes auf das Zahnrad übertragen wird.

Bei der Verwendung von Schneckengetrieben zur Verstellung von Lamellen tritt konstruktionsbedingt ein Spiel in der Kraftübertragung auf. Dieses Spiel resultiert daraus, dass das Zahnrad im Schneckengewinde im Betrieb an einer Gewindeflanke anliegt, während zur gegenüberliegenden Gewindeflanke ein Abstand verbleibt. Durch diesen Abstand kann sich das Zahnrad relativ zum Schneckengewinde geringfügig zurückdrehen bzw. bewegen, bis der Zahn an der gegenüberliegenden Flanke des Schneckengewindes anschlägt. Dieses Hin- und Herbewegen innerhalb des Spiels kann bei äußeren Einwirkungen, insbesondere bei Windlasten, zu hörbaren Klappergeräuschen der Lamellen führen. Solche Geräusche werden von Nutzern als störend empfunden und können den Gesamteindruck des Beschattungssystems beeinträchtigen.

Eine Möglichkeit zur Reduzierung des Spiels besteht in der Verwendung von spielfreien Einzelgetrieben. Derartige Getriebe erfordern jedoch eine aufwendigere Konstruktion und sind mit höheren Herstellungskosten verbunden. Zudem kann die Realisierung eines vollständig spielfreien Getriebes in der Praxis schwierig sein und zu erhöhtem Verschleiß führen.

Es wurde erkannt, dass eine Lamellenverstelleinrichtung benötigt wird, die eines oder mehrere dieser Probleme überwindet.

### ZUSAMMENFASSUNG DER ERFINDUNG

Es wird eine Lamellenverstelleinrichtung eines Pergola- und/oder Beschattungssystems bereitgestellt. Die Lamellenverstelleinrichtung wirkt mit einer Lamelle zusammen, die um eine Drehachse drehbar ist. Die Verstelleinrichtung weist insbesondere ein erstes Getriebe auf, das an einem ersten Ende der Lamelle angeordnet ist, wobei das erste Getriebe ein erstes Schneckengewinde und ein erstes Zahnrad umfasst, das in das erste Schneckengewinde eingreift, sowie ein zweites Getriebe, das an einem zweiten Ende der Lamelle angeordnet ist, das dem ersten Ende gegenüberliegt, wobei das zweite Getriebe ein zweites Schneckengewinde und ein zweites Zahnrad umfasst, das in das zweite Schneckengewinde eingreift, wobei die Schneckengewinde Gewindeflanken aufweisen und zumindest im bewegungslosen Zustand mindestens ein Zahn des ersten Zahnrads und mindestens ein Zahn des zweiten Zahnrads an zueinander entgegengesetzt orientierten Seiten der Gewindeflanken der jeweiligen Schneckengewinde anliegen.

Durch die Anordnung zweier Getriebe an gegenüberliegenden Enden der Lamelle, wobei die Zahnräder an entgegengesetzt orientierten Gewindeflanken anliegen, wird eine gegenseitige Blockierung von Spielbewegungen erreicht. Eine Spielbewegung, die in einem Getriebe möglich wäre, wird durch das gegenüberliegende Getriebe blockiert, da dort bereits ein Flankenkontakt in der entgegengesetzten Drehrichtung vorliegt. Dadurch wird das Gesamtspiel der Lamelle auf Systemebene reduziert oder unterbunden, ohne dass spielfreie Einzelgetriebe erforderlich sind. Dies führt zu einer Verminderung oder Vermeidung von Klappergeräuschen bei äußeren Einwirkungen wie Windlasten nach der vorliegenden erfindungsgemäßen Verfahren und/oder Vorrichtung und/oder System.

Zweckmäßig kann die Lamelle eine Lamellenwelle aufweisen, die sich zumindest bereichsweise entlang der Drehachse der Lamelle erstreckt.

Die Lamellenwelle dient vorteilhaft als drehmomentübertragendes Verbindungselement zwischen dem jeweiligen Getriebe und der Lamelle. Durch die Koppelung der Lamellenwelle(nelemente) entlang der Drehachse wird eine mechanische Kopplung der beiden Getriebe ermöglicht, sodass die Vorspannung zwischen den Getrieben über die gesamte Länge der Lamelle wirksam ist und eine gleichmäßige Stabilisierung der Lamelle erreicht wird.

Vorteilhaft kann das erste Getriebe über ein erstes Verbindungselement als Lamellenwellensegment mit der Lamelle gekoppelt sein.

Das erste Verbindungselement ermöglicht bevorzugt eine lösbare oder feste mechanische Verbindung zwischen dem ersten Getriebe und der Lamelle. Durch diese Kopplung wird das vom ersten Getriebe erzeugte Drehmoment auf die Lamellenwelle übertragen, wobei das Verbindungselement und/oder Lamellenwellensegment und/oder als Kupplung ausgebildet sein kann, die eine einfache Montage und gegebenenfalls einen Austausch von Komponenten ermöglicht.

Zweckmäßig kann das zweite Getriebe über ein zweites Verbindungselement Lamellenwellensegment mit der Lamelle gekoppelt sein.

Das zweite Verbindungselement stellt bevorzugt die mechanische Verbindung zwischen dem zweiten Getriebe und der Lamellenwelle auf der gegenüberliegenden Seite der Lamelle her und/oder kann als Lamellenwellensegment und/oder als Kupplungkann ausgebildet sein. Durch die symmetrische Anordnung an beiden Enden der Lamellenwelle/der Lamelle wird eine gleichmäßige Kraftübertragung und eine effektive Vorspannung zwischen den beiden Getrieben gewährleistet.

Vorteilhaft kann die Lamelle sich in einer Längsrichtung erstrecken und um die Drehachse schwenkbar angeordnet sein.

Die Schwenkbarkeit der Lamelle um die Drehachse ermöglicht bevorzugt eine Verstellung zwischen verschiedenen Ausrichtungen, insbesondere zwischen einer horizontalen und einer vertikalen Position. Diese Verstellbarkeit erlaubt eine variable Licht- und Luftregulierung in Pergola- und Beschattungssystemen, wobei die Lamelle durch die beidseitige Getriebeanbindung in jeder Schwenkposition stabil gehalten wird.

Zweckmäßig können das erste Schneckengewinde und das zweite Schneckengewinde jeweils mehrere umlaufende Gewindegänge aufweisen.

Vorteilhaft kann eine Drehbewegung des ersten Getriebes und des zweiten Getriebes auf die Lamelle übertragbar sein.

Die Übertragbarkeit der Drehbewegung von beiden Getrieben auf die Lamelle ermöglicht bevorzugt eine synchrone als auch eine bewusst asynchrone Verstellung der Lamelle an beiden Enden. Durch die beidseitige Antriebsmöglichkeit wird eine steuerbare Bewegung der Lamelle erreicht. Beispielsweise durch gezielte Ansteuerung der einzelnen Antriebe kann die entgegengesetzte Flankenanlage der Zahnräder eine Reduzierung von unerwünschten Spielbewegungen bewirken kann.

Bevorzugt wird ein Pergola- oder Beschattungssystem mit einer Lamellenverstelleinrichtung wie vorstehend beschrieben bereitgestellt.

Das Pergola- oder Beschattungssystem profitiert von der spielreduzierten Lamellenverstelleinrichtung, indem Klappergeräusche bei Windlasten oder anderen äußeren Einwirkungen vermindert oder vermieden werden. Dies führt zu einem verbesserten Nutzererlebnis und einer erhöhten Wertigkeit des Gesamtsystems.

Bevorzugt wird ein Verfahren zum Stabilisieren einer Lamelle eines Pergola- oder Beschattungssystems mittels einer Verstelleinrichtung wie vorstehend beschrieben bereitgestellt. Das Verfahren umfasst das Antreiben des ersten Schneckengewindes und des zweiten Schneckengewindes, wobei zumindest im bewegungsfreien Zustand durch die zueinander entgegengesetzt orientierten Anlageseiten der Zahnräder an den jeweiligen Schneckengewinden ein Spiel in den Getrieben kompensiert wird.

Durch die entgegengesetzter Flankenanlage der Zahnräder wird eine systemische Vorspannung erzeugt, die das konstruktive Spiel der einzelnen Getriebe auf Systemebene kompensiert. Die entgegengesetzte Anlage der Zahnräder an Gewindeflanken des Schneckengetriebes kann beispielsweise durch einen leicht verdrehten Einbau der Lamelle an den Getriebeabtrieben und/oder durch asynchrones Abstellen der Antriebe der beidseitig angeordneten Getriebe nach einer Verdrehberwegung und/oder durch eine bewusste Rückdrehung eines Antriebs nach der Erreichten Drehposition der Lamelle erreicht werden, um Spannung zwischen den Getrieben aufzubauen und eine Zwangsanlage der Zahnräder an entgegengesetzt ausgerichteten Flanken der Schneckengewinde zu bewirken.

Der verdrehte Einbau kann das Einbringen der Lamelle an den Wellenelementen/Kupplungsteilen an dessen beiden Enden um wenige Grad verdreht zueinander (z.B. von 1° bis 6° verdreht bezogen auf einegemeinsamen Ausgangsebene entlang einer zur Lemellenlängsrichtung koplanaren ebene) bedeuten. Bei einer Bewegung kann die Kraft der Antriebe die Lamelle leicht in sich verdrehen, um eine Kraftübertragung über beide Getriebe/Antriebe zu bewirken. Durch Entspannung der Lamelle, insbesondere wenn keine äußere Kraft des dich bewegenden Antriebs auf die Lamelle/ das Getriebe wirkt, wird spätestens im bewegungslosen Zustand dann wieder der Kontakt der Zahnränder mit zueinander spiegelbildlich ausgerichteten Flanken der bei den Schneckengewinde hergestellt und das Spiel verhindert und/oder aufgehoben.
Fig. 1 zeigt eine isometrische Ansicht einer Lamelle mit einer Verstelleinrichtung gemäß einem Aspekt der vorliegenden Offenbarung.
Fig. 2 zeigt eine isometrische Ansicht eines ersten Getriebes der Verstelleinrichtung von Fig. 1 gemäß einem Ausführungsbeispiel.
Fig. 3 zeigt eine isometrische Ansicht eines zweiten Getriebes der Verstelleinrichtung von Fig. 1 gemäß einem Ausführungsbeispiel.
Fig. 4 zeigt eine Detailansicht einer Spielsituation zwischen einem Zahnrad und einem Schneckengewinde gemäß einem Aspekt der vorliegenden Offenbarung.

Die vorliegende Erfindung betrifft eine Lamellenverstelleinrichtung eines Pergola- und/oder Beschattungssystems. Derartige Systeme umfassen Lamellen, die um eine Längs- bzw. Drehachse zwischen mindestens zwei Ausrichtungen entlang einer Länchsaches schwenkbar sind, beispielsweise zwischen einer horizontalen und einer vertikalen Orientierung. Die Verstellung der Lamellen erfolgt über Getriebeeinheiten, insbesondere Schneckengetriebe mit Schneckengewinde und Zahnrad.

Die vorliegende Lamellenverstelleinrichtung begegnet dem konstruktiven Spiel eines einzelnen Schneckengetriebes dadurch, dass zwei Getriebe an gegenüberliegenden Enden einer Lamelle vorgesehen werden. Die Zähne der Zahnräder liegen zumindest im bewegungslosen Zustand an gegenläufig orientierten Gewindeflanken der Schneckengewinde an, also an zwei zueinander zugewandten oder einander abgewandten Flanken. Dadurch wird erreicht, dass eine Spielbewegung, die in einem Getriebe möglich wäre, durch das gegenüberliegende Getriebe blockiert wird, da dort bereits ein Flankenkontakt in der entgegengesetzten Drehrichtung vorliegt. Eine Lamellenwelle ist somit systemisch in beiden Drehrichtungen vorgespannt bzw. drehfest abgestützt, sodass ein Gesamtspiel der Lamelle trotz Einzelspiel der Getriebe reduziert oder verhindert wird.

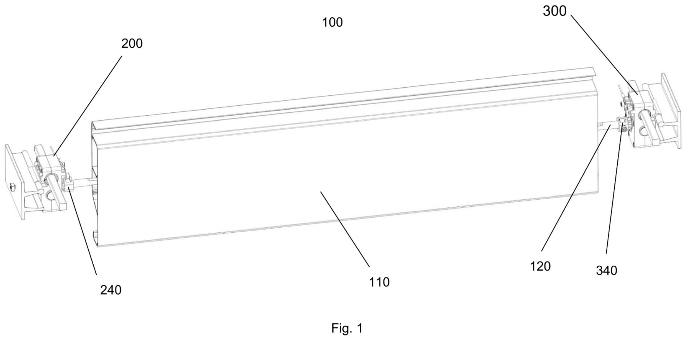

Fig. 1 zeigt eine Gesamtanordnung einer Lamellenverstelleinrichtung. Die Lamellenverstelleinrichtung umfasst eine Lamelle 100, die um eine Drehachse 110 drehbar ist. Die Lamelle 100 erstreckt sich in einer Längsrichtung und ist um die Drehachse 110 schwenkbar angeordnet. Die Lamelle 100 ist zwischen einer horizontalen und einer vertikalen Orientierung verstellbar, wobei mindestens zwei Ausrichtungen möglich sind.

Die Lamelle 100 weist eine Lamellenwelle 120 auf, die sich zumindest bereichsweise entlang der Drehachse 110 erstreckt. Die Lamellenwelle 120 dient zur Drehmomentübertragung. Die Lamellenwelle 120 kann als durchgehende Welle ausgeführt sein. Alternativ ist die Lamellenwelle 120 als funktional äquivalente Verbindung zu den Getrieben mit zwei Steckverbindern ausgeführt.

Ein erstes Getriebe 200 ist an einem ersten Ende der Lamelle 100 angeordnet. Ein zweites Getriebe 300 ist an einem zweiten Ende der Lamelle 100 angeordnet, das dem ersten Ende gegenüberliegt. Die zwei Getriebe 200, 300 sind somit an gegenüberliegenden Enden der Lamelle 100 angeordnet.

Das erste Getriebe 200 ist bevorzugtüber ein erstes Verbindungselement 240 mit der Lamellenwelle 120 gekoppelt. Das zweite Getriebe 300 ist bevorzugt über ein zweites Verbindungselement 340 mit der Lamellenwelle 120 gekoppelt. Die Verbindungselemente 240, 340 stellen bevorzugt die mechanische Kopplung zwischen den Getrieben 200, 300 und der Lamellenwelle 120 her, sodass eine Drehbewegung der Getriebe 200, 300 auf die Lamelle 100 übertragen wird. Die Verbindungselemente 240, 340 sind bevorzugt als Kupplungen ausgeführt.

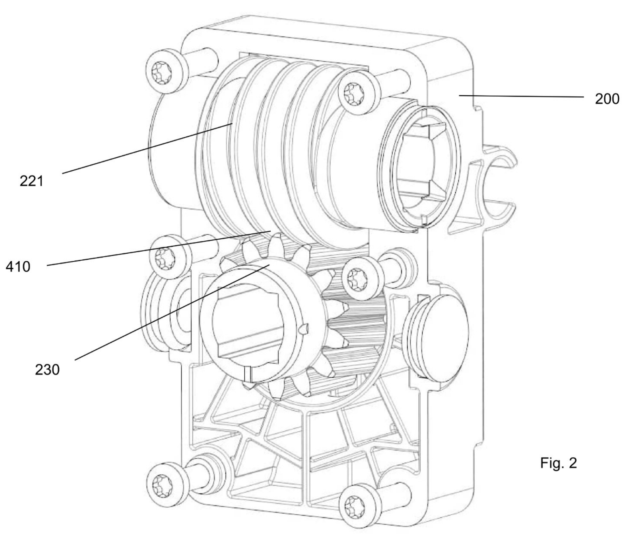

Fig. 2 zeigt eine isometrische Ansicht des ersten Getriebes 200. Das erste Getriebe 200 umfasst ein erstes Schneckengewinde 221 sowie ein erstes Zahnrad 230, das in das erste Schneckengewinde 221 eingreift.

Das erste Schneckengewinde 221 ist bevorzugt als zylindrisches Element ausgebildet und weist bevorzugt mehrere umlaufende Gewindegänge auf. Das erste Schneckengewinde 221 ist bevorzugt im oberen Bereich des ersten Getriebes 200 angeordnet und erstreckt sich bevorzugt horizontal. Die Gewindegänge des ersten Schneckengewindes 221 weisen Gewindeflanken auf, die zur Kraftübertragung mit dem ersten Zahnrad 230 zusammenwirken.

Das erste Zahnrad 230 ist bevorzugt unterhalb des ersten Schneckengewindes 221 positioniert und weist mehrere radial angeordnete Zähne auf. Die Zähne des ersten Zahnrads 230 stehen mit den Gewindegängen des ersten Schneckengewindes 221 in Eingriff. Das erste Zahnrad 230 liegt an einer anliegenden Gewindeflanke 410 des ersten Schneckengewindes 221 an. Die anliegende Gewindeflanke 410 bildet die Kontaktfläche, an der bevorzugt im Betrieb die Kraftübertragung zwischen dem ersten Schneckengewinde 221 und dem ersten Zahnrad 230 stattfindet.

Das erste Getriebe 200 ist bevorzugt in einem Gehäuse untergebracht. Das Gehäuse weist bevorzugt mehrere Befestigungspunkte mit Schrauben auf, die eine Montage des ersten Getriebes 200 an einer Tragstruktur ermöglichen. Im unteren Bereich des Gehäuses ist bevorzugt eine Verstärkungsstruktur mit bevorzugt einem gitterartigen Muster vorgesehen. An einer Seite des ersten Getriebes 200 ist bevorzugt eine zylindrische Öffnung ausgebildet, die zur Aufnahme eines Verbindungselements dient und bevorzugt die Kopplung mit der Lamellenwelle 120 ermöglicht.

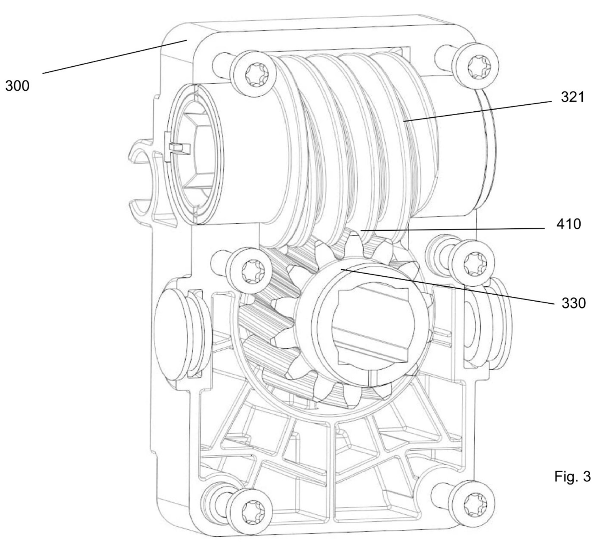

Fig. 3 zeigt eine isometrische Ansicht des zweiten Getriebes 300. Das zweite Getriebe 300 umfasst ein zweites Schneckengewinde 321 sowie ein zweites Zahnrad 330, das in das zweite Schneckengewinde 321 eingreift.

Das zweite Schneckengewinde 321 weist mehrere spiralförmig angeordnete Gewindegänge auf, die sich bevorzugt entlang einer zylindrischen Welle erstrecken. Das zweite Schneckengewinde 321 ist bevorzugt im oberen Bereich des zweiten Getriebes 300 angeordnet und erstreckt sich horizontal. Das zweite Zahnrad 330 ist bevorzugt unterhalb des zweiten Schneckengewindes 321 positioniert und weist mehrere radial angeordnete Zähne auf, die mit den Gewindegängen des zweiten Schneckengewindes 321 in Eingriff stehen.

Das zweite Getriebe 300 ist in einem Gehäuse untergebracht, das mehrere Befestigungspunkte aufweist. An einer Seite des zweiten Getriebes 300 ist eine zylindrische Öffnung vorgesehen, die zur Aufnahme des zweiten Verbindungselements 340 dient.

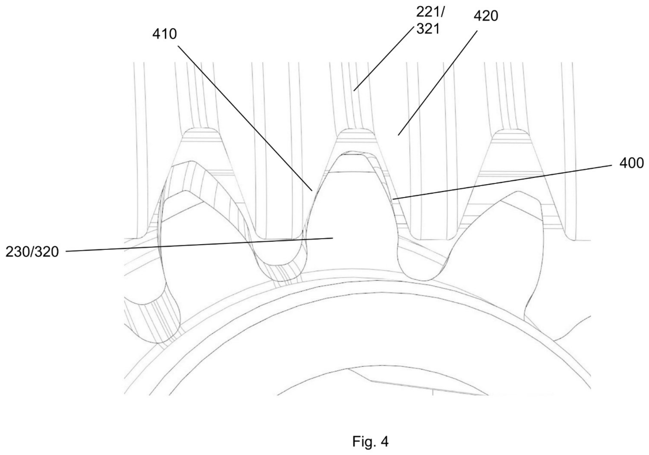

Fig. 4 zeigt eine Detailansicht der Spielsituation zwischen einem Zahnrad 230, 330 und einem Schneckengewinde 221, 321. Das Zahnrad 230, 330 greift in das Schneckengewinde 221, 321 ein und liegt an einer anliegenden Gewindeflanke 410 an. Zwischen dem Zahnrad 230, 330 und einer gegenüberliegenden Gewindeflanke 420 besteht ein Abstand, der ein Spiel 400 definiert. Das Spiel 400 entsteht dadurch, dass das Zahnrad 230, 330 im Betrieb an einer Seite des Gewindegangs anliegt, nämlich an der anliegenden Gewindeflanke 410, während zur anderen Seite, der gegenüberliegenden Gewindeflanke 420, ein konstruktionsbedingter Abstand verbleibt.

Diese Spielsituation ermöglicht eine geringfügige Relativbewegung zwischen dem Schneckengewinde 221, 321 und dem Zahnrad 230, 330, bis der Zahn an der gegenüberliegenden Gewindeflanke 420 anschlägt. Bei äußeren Einwirkungen, insbesondere Wind, führt diese Relativbewegung innerhalb des Spiels 400 zu hörbarem Klappern der Lamelle 100.

Zumindest im bewegungslosen Zustand liegen mindestens ein Zahn des ersten Zahnrads 230 und mindestens ein Zahn des zweiten Zahnrads 330 an zueinander entgegengesetzt orientierten Seiten der Gewindeflanken der jeweiligen Schneckengewinde 221, 321 an. Das erste Zahnrad 230 liegt an einer ersten anliegenden Gewindeflanke 410 des ersten Schneckengewindes 221 an, während das zweite Zahnrad 330 an einer spiegelbildlich orientierte Gewindeflanke 410 des zweiten Schneckengewindes 321 anliegt (bevorzug voneinander wegweisende oder zueinanderweisende Flanken). Durch diese gegenläufige Anlage der Zahnräder 230, 330 an den jeweiligen Gewindeflanken wird das Spiel 400 auf Systemebene kompensiert. Eine Spielbewegung, die in einem Getriebe 200, 300 möglich wäre, wird durch das gegenüberliegende Getriebe 300, 200 blockiert, da dort bereits ein Flankenkontakt in der entgegengesetzten Drehrichtung vorliegt.

Das Anliegen der Zähne der Zahnräder 230, 330 an entgegengesetzt ausgerichteten Flanken der Schneckengewinde 221, 321 ist durch verschiedene Methoden erzielbar, welche beispielhaft und nicht abschließen nachfolgenden erwähnt werden.

Gemäß einer ersten Möglichkeit erfolgt das Anliegen der Zähne der Zahnräder 230, 330 an entgegengesetzt ausgerichteten Flanken durch einen leicht verdrehten Einbau der Lamelle 100 an den Getriebeabtrieben, insbesondere an den Verbindungselementen 240, 340. Bei dieser Methode wird die Lamelle 100 bei der Montage geringfügig tordiert, sodass die Zahnräder 230, 330 an spiegelbildlichen Flanken der jeweiligen Schneckengewinde 221, 321 zur Anlage kommen.

Gemäß einer zweiten Möglichkeit erfolgt das Anliegen der Zähne der Zahnräder 230, 330 an entgegengesetzt ausgerichteten Flanken durch asynchrones Abstellen der Antriebe der beidseitig angeordneten Getriebe 200, 300 nach einer Drehbewegung der Lamelle 100. Bei dieser Methode werden die Antriebe der Getriebe 200, 300 zeitlich versetzt abgeschaltet, sodass sich die gewünschte entgegengesetzte Flankenanlage einstellt.

Gemäß einer dritten Möglichkeit erfolgt das Anliegen der Zähne der Zahnräder 230, 330 an entgegengesetzt ausgerichteten Flanken durch eine bewusste Rückdrehung eines Antriebs nach einer erfolgten Dregbewegung, um Spannung zwischen den Getrieben 200, 300 aufzubauen. Bei dieser Methode wird einer der Antriebe nach dem Erreichen einer Zielposition geringfügig zurückgedreht, wodurch eine Zwangsanlage der Zahnräder 230, 330 an entgegengesetzt ausgerichteten Flanken der Schneckengewinde 221, 321 bewirkt wird.

Eine Möglichkeit zum Stabilisieren einer Lamelle 100 eines Pergola- oder Beschattungssystems mittels einer Verstelleinrichtung umfasst das Antreiben des ersten Schneckengewindes 221 und/oder des zweiten Schneckengewindes 321. Durch die zueinander entgegengesetzt orientierten Anlageseiten der Zahnräder 230, 330 an den jeweiligen Schneckengewinden 221, 321 wird das Spiel 400 in den Getrieben 200, 300 kompensiert. Die Lamellenverstelleinrichtung ist in einem Pergola- oder Beschattungssystem einsetzbar.

## Patentansprüche

1. Lamellenverstelleinrichtung eines Pergola- und/oder Beschattungssystems, mit:
eine Lamelle (100), die um eine Drehachse (110) drehbar ist, ein erstes Getriebe (200), das an einem ersten Ende der Lamelle (100) angeordnet ist, wobei das erste Getriebe (200) ein erstes Schneckengewinde (221) und ein erstes Zahnrad (230) umfasst, das in das erste Schneckengewinde (221) eingreift, ein zweites Getriebe (300), das an einem zweiten Ende der Lamelle (100) angeordnet ist, das dem ersten Ende gegenüberliegt, wobei das zweite Getriebe (300) ein zweites Schneckengewinde (321) und ein zweites Zahnrad (330) umfasst, das in das zweite Schneckengewinde (321) eingreift, wobei die Schneckengewinde (221, 321) Gewindeflanken aufweisen und zumindest im bewegungslosen Zustand mindestens ein Zahn des ersten Zahnrads (230) und mindestens ein Zahn des zweiten Zahnrads (330) an zueinander entgegengesetzt orientierten Seiten der Gewindeflanken der jeweiligen Schneckengewinde (221, 321) anliegen.

2. Lamellenverstelleinrichtung nach Anspruch 1, wobei die Lamelle (100) eine Lamellenwelle (120) aufweist, die sich zumindest bereichsweise entlang der Drehachse (110) erstreckt.

3. Lamellenverstelleinrichtung nach Anspruch 2, wobei das erste Getriebe (200) über ein erstes Verbindungselement (240) mit der Lamellenwelle (120) gekoppelt ist.

4. Lamellenverstelleinrichtung nach Anspruch 2 oder 3, wobei das zweite Getriebe (300) über ein zweites Verbindungselement (340) mit der Lamellenwelle (120) gekoppelt ist.

5. Lamellenverstelleinrichtung nach einem der vorhergehenden Ansprüche, wobei die Lamelle (100) sich in einer Längsrichtung erstreckt und um die Drehachse (110) schwenkbar angeordnet ist.

6. Lamellenverstelleinrichtung nach einem der vorhergehenden Ansprüche, wobei das erste Schneckengewinde (221) und das zweite Schneckengewinde (321) jeweils mehrere umlaufende Gewindegänge aufweisen.

7. Lamellenverstelleinrichtung nach einem der vorhergehenden Ansprüche, wobei eine Drehbewegung des ersten Getriebes (200) und des zweiten Getriebes (300) auf die Lamelle (100) übertragbar ist.

8. Pergola- oder Beschattungssystem mit einer Lamellenverstelleinrichtung nach einem der Ansprüche 1 bis 7.

9. Verfahren zum Stabilisieren einer Lamelle (100) eines Pergola- oder Beschattungssystems mittels einer Verstelleinrichtung nach einem der Ansprüche 1 bis 7, wobei das Verfahren umfasst:
Antreiben des ersten Schneckengewindes (221) und des zweiten Schneckengewindes (321), wobei durch die zueinander entgegengesetzt orientierten Anlageseiten der Zahnräder (230, 330) an den jeweiligen Schneckengewinden (221, 321) ein Spiel (400) in den Getrieben (200, 300) kompensiert wird.
